(19)

Europäisches Patentamt

European Patent Office

Office européen des brevets

(11)   **EP 2 975 789 A1**

(12)   **EUROPEAN PATENT APPLICATION**

(43) Date of publication:
**20.01.2016  Bulletin 2016/03**

(51) Int Cl.:
*H04B 10/516* (2013.01)        *H04J 14/02* (2006.01)

(21) Application number: **14290219.6**

(22) Date of filing: **18.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Ghazisaeidi, Amirhossein**
**91620 Nozay (FR)**

• **Charlet, Gabriel**
**91620 Nozay (FR)**
• **Salsi, Massimiliano**
**SAN Jose, CA 95132 (US)**

(74) Representative: **MERH-IP Matias Erny Reichl Hoffmann**
**Patentanwälte PartG mbB**
**Paul-Heyse-Strasse 29**
**80336 München (DE)**

Remarks:
Amended claims in accordance with Rule 137(2) EPC.

(54)   **Optical transmitter**

(57)   The present document relates to an optical transmitter (100, 300) for providing an optical signal according to a Wavelength Division Multiplex (WDM) grid with a WDM channel spacing to a dispersion managed optical link, the optical transmitter (100, 300) comprising:
- a digital signal processor (DSP) (110) for processing a sequence of digital data values, the DSP (110) being adapted to generate a Return-to-zero (RZ) pulse shaping for the sequence of digital data values by applying a digital pulse shaping filter (115) to thereby generate a pulse shaped sequence of data values;
- a digital to analog converter (DAC) (120) being adapted to generate an analog sequence of signal values based on the pulse shaped sequence of data values;
- an optical light source (150) for providing an optical signal; and
- an optical modulator (140) being adapted to modulate, at a symbol rate (B), the optical signal based on said analog sequence of signal values,

wherein the channel spacing of the WDM grid is greater than said symbol rate (B), and the digital pulse shaping filter (115) is adapted to increase the spectral bandwidth of the pulse shaped data values with respect to the Nyquist bandwidth corresponding to the symbol rate (B).

Fig. 3

**Description**

The present document relates to optical transmitters.

<u>BACKGROUND</u>

When upgrading already deployed optical transmission systems relying on a dispersion managed link, optical nonlinearity is often a major limitation. In optical systems providing polarization multiplex, one of the main limiting effects is the interaction between optical signals along a first polarization with optical signals along the second orthogonal polarization.

In order to cope with this problem, a RZ (return to zero) modulation may be applied to the optical signal. Said RZ modulation may be achieved by an optical modulator or optical carver. In order to minimize the nonlinear interactions between the two polarizations, the RZ data values may be time-interleaved by half symbol duration. Thereby, the optical signal pulses of both polarizations are time-shifted with respect to each other, wherein, for example, the main power of the signal pulses of the first polarization is comprised within the first half of symbol duration and the main power of the signal pulses of the second polarization is comprised within the second half of symbol duration (both halves referring to the signal pulses of the first polarization).

Disadvantageously, optical RZ pulse shaping is costly and increases the footprint of the optical transmitter because an additional optical modulator applying the RZ modulation is required. Furthermore, using optical RZ modulation leads to a broadened spectrum of the signal pulses having no sharp spectrum edge, which may limit the possibility to densely pack the WDM channels. Typically, further narrow band optical filters are required to combine WDM channels.

<u>SUMMARY</u>

Hence, there is a need to provide for an improved optical transmitter which reduces non-linear effects in an effective and cost-efficient way. Similarly, an improved method for providing an optical signal to an optical transmission link is desired.

According to a first aspect, an optical transmitter for providing an optical signal to a dispersion managed optical link is provided. The dispersion managed optical link operates according to a Wavelength Division Multiplex (WDM) grid with certain WDM channel spacing. The dispersion managed link may comprise different types of fibers which are arranged in an alternating manner, i.e. the dispersion profile of the link is periodic.

The optical transmitter comprises a digital signal processor (DSP) for processing a sequence of digital data values. The digital signal processor may be implemented by a software programmable signal processor, or in a fixed hardware structure using many different technologies, e.g. ASICs, programmable arrays, etc. More in detail, the DSP may be adapted to generate a Return-to-zero (RZ) pulse shaping for the sequence of digital data values by applying a digital pulse shaping filter on the digital data values. In other words, the digital data values may be filtered in the DSP using a digital filter function thereby applying pulse shaping to the digital data values. Thereby, a pulse shaped sequence of data values having a desired spectrum is generated which comprises a RZ coding. Optionally, an upsampling of the digital data values may be provided so that the pulse shaped sequence of data values may have a different (typically increased) sampling rate.

Furthermore, the optical transmitter comprises a digital to analog converter (DAC). Said DAC receives the pulse shaped sequence of data values and generates an analog sequence of signal values based on the pulse shaped sequence of data values. Said analog sequence of signal values may be provided to an optical modulator which is adapted to modulate an optical signal provided by an optical light source. Said optical modulator may modulate, the optical signal with a symbol rate corresponding on said analog sequence of values.

Further, the symbol rate of the modulated optical signal may be chosen such that the channel spacing of the WDM grid is greater than said symbol rate. The filter function of the digital pulse shaping filter may be configured to increase the spectral bandwidth of the pulse shaped data values with respect to the Nyquist bandwidth corresponding to the symbol rate. By increasing the bandwidth in the spectral domain, the signal pulses are narrowed in time domain. Thereby, nonlinear effects, in particular caused by a signal pulse overlap in different polarizations, can be reduced. Due to including the RZ pulse shaping in the electrical, digital domain, i.e. performing the RZ pulse shaping within the DSP, a cost-efficient RZ pulse shaping is obtained without the need of an optical modulator implementing the RZ pulse shaping in the optical domain. Further, more appropriate pulse shapes can be generated by the digital pulse shaping than by applying optical pulse carvers.

According to an embodiment, the pulse shaped data values define a spectrum with top, lateral edges and respective corners between the top and the lateral edges. The digital pulse shaping filter may be adapted to round said corners in the spectrum of the pulse shaped data values. In other words, the digital pulse shaping filter may be adapted to generate pulse shaped data values having a spectrum with a convex top portion, e.g. by rounding the spectral corners.

In other words, the filter function of the digital pulse shaping filter is designed such that the transitions (corners) between a flat or essentially flat top portion of the spectrum and steep spectral lateral edges limiting the bandwidth of the pulse shaped data values are rounded. Thereby, the inter-symbol interference between consecutive symbols can be significantly decreased compared to a rectangular spectrum having an increased bandwidth (over the Nyquist bandwidth).

According to embodiments, the digital pulse shaping filter is adapted to increase the spectral bandwidth of data pulses by a factor of at least 25%, preferably by a factor of at least 50%, with reference to the Nyquist bandwidth corresponding to the symbol rate. The increased spectral bandwidth of data pulses may be the 3dB bandwidth. By increasing the bandwidth of the signal pulses, the impulse response thereof is narrowed in time domain, which leads to narrower signal pulses in time domain. Thereby, nonlinear effects, specifically the nonlinear interactions of data values being modulated onto different polarizations of the optical signal, can be significantly reduced. Due to the reduced nonlinear effects among the polarization multiplexed signals, launch signal power may be increased, which may have further positive effects to transmission quality.

According to embodiments, the channel spacing of the WDM grid exceeds the Nyquist bandwidth corresponding to the symbol rate at least by the factor of 1.1. Preferably, the WDM grid exceeds the symbol rate at least by the factor of 1.3 to 1.7, e.g. 1.4, 1.5 or 1.6. Said channel spacing - symbol rate - relationship enables a broadening of the bandwidth of the digital data values broader than the Nyquist bandwidth without the occurrence of inter-channel interference.

According to embodiments, the digital pulse shaping filter is adapted to produce spectral edges of the pulse shaped data values such that, at channel boundaries of the WDM grid, the spectral power of the pulse shaped data values is at least 20dB lower than the maximum spectral power value of the pulse shaped data values. In addition, in order to achieve a significant narrowing of signal pulses in the time domain, signal power at the spectral edges of the pulse shaped data (in particular close to the channel boundaries of the WDM grid) should be reduced as much as possible. By obtaining a lowering of the power of the pulse shaped data values by at least 20dB at channel boundaries, an optimized tradeoff between broadening the spectrum of the pulse shaped data values and limiting the inter-channel interference is achieved.

According to embodiments, the digital pulse shaping filter is adapted to provide pulse shaped data values having a spectrum that resembles a Gaussian spectrum, for example a truncated Gaussian spectrum. Said kind of spectrum has many preferred characteristics. A Gaussian pulse has minimum time-bandwidth product, i.e. for a given bandwidth it is the shortest pulse in time domain. By truncating the frequency response of the Gaussian pulse, the crosstalk between consecutive channels is limited, Hence, using pulses with a truncated Gaussian spectrum enables the lowering of nonlinear distortions as well as reducing the inter-symbol interference. Thus, the spectrum of the pulse shaped data values may be based on an exponential function, in particular where the square of the signal frequency f is used such as in $\exp(-f^2)$ and possibly applying additional scaling and normalization. In order to provide sharp edges or cut-offs, the exponential function may be truncated at a cut-off point.

According to embodiments, the digital pulse shaping filter is adapted to provide pulse shaped data values with a truncated Gaussian spectrum having a spectral shape according to the following formula:

$$H(f; a; \eta; \gamma; B) = \begin{cases} \exp\left[\dfrac{-a\,\gamma f^2}{B^2(1+\eta)^2}\right]; & 0 < |f| < 0{,}5B(1+\eta) \\ 0; & otherwise \end{cases}$$

wherein $a$ is a normalization constant, $\gamma$ is a pre-emphasis factor, $\eta$ is a bandwidth extension factor and B is the symbol rate.

In the above formula, $\eta$ defines the bandwidth extension of the pulse shaped data values with respect to the Nyquist bandwidth and wherein $\eta$ may be chosen to meet $\eta \geq 0.25$. $\eta$ further defines the cut-off point of the truncated spectrum.

In the above formula, $\gamma$ defines the rounding of the pulse shaped data values and wherein $0dB < \gamma < 10dB$ may be selected. Preferably, $\gamma$ may be chosen such that the spectrum of the digital data values is at least 3dB, 6dB or 9dB lower in the region of the transition between the top portion and the steep edges of the spectrum (i.e. at the corners) with reference to the maximum power value of the pulse shaped data values. Thereby, the inter-symbol interference can be significantly reduced.

In the above formula, $a$ is a normalization constant and may be in the range of 0.4 to 0.6, preferably between 0.45 and 0.5, most preferably 0.4604. A selection of 0.4604 is useful because the loss is defined in dB (i.e., logarithm in base 10) and the arguments are in exponential function.

According to embodiments, the pulse shaping filter is a digital finite impulse response (FIR) filter. Said FIR filter may comprise a plurality of filter taps which may be chosen in order to achieve said spectral broadening and spectral rounding of the digital data pulses, and in particular to achieve a desired spectral shape as explained above.

According to embodiments, the optical transmitter comprises a first transmitter path adapted to provide a first optical signal with a first polarization direction and a second transmitter path adapted to provide a second optical signal with a second polarization direction. The first and second polarization directions may be orthogonal with respect to each other. Thereby, the optical transmitter is adapted to provide a polarization-multiplexed signal.

According to embodiments, the first transmitter path comprises an optical modulator for modulating the first optical signal and the second transmitter path comprises an optical modulator for modulating the second optical signal. The optical modulator of the first transmitter path may be configured to modulate the first optical signal and the optical modulator of the second transmitter path may be configured to modulate the second optical signals such that the optical pulses of the first and second optical signal are time-interleaved. For example, the optical modulators may be I/Q-modulators for providing a QAM-signal, Said time interleaving may be chosen such that the digital RZ data values of the first transmitter path are staggered with respect to the digital RZ data values of the second transmitter path. Preferably, the time offset of the digital RZ data is a half symbol duration (T/2). Thereby, nonlinear interactions between both polarizations are significantly decreased.

According to a further aspect, a method for providing an optical signal according to a Wavelength Division Multiplex (WDM) grid with a WDM channel spacing to a dispersion managed optical link is disclosed. The method may comprise the following steps: First, a sequence of digital data values is digitally processed (e.g. by a DSP), the digital processing including a Return-to-zero (RZ) pulse shaping for the sequence of digital data values by applying a pulse shaping filter to thereby generate a pulse shaped sequence of data values. Following, an analog sequence of signal values is generated based on the pulse shaped sequence of data values by means of a digital to analog converter and an optical signal may be provided by means of an optical light source. The optical signal is modulated at a symbol rate based on said analog sequence of values. The channel spacing of the WDM grid may be greater than said symbol rate. The digital pulse shaping filter may increase the spectral bandwidth of the pulse shaped data values with respect to the Nyquist bandwidth corresponding to the symbol rate.

It should be noted that the methods and systems including its preferred embodiments as outlined in the present patent application may be used stand-alone or in combination with other methods and systems disclosed in this document. Furthermore, all aspects of the methods and systems outlined in the present patent application may be arbitrarily combined. In particular, the features of the claims may be combined with one another in an arbitrary manner. Further, if not explicitly indicated otherwise, embodiments of the invention can be freely combined with each other.

## BRIEF DESCRIPTION OF THE DRAWINGS

Embodiments of the invention are explained below in an exemplary manner with reference to the accompanying drawings, wherein

Fig. 1    illustrates an example schematic block diagram of an optical transmitter;

Fig. 2    illustrates an example schematic block diagram of the digital signal processor comprised in the optical transmitter according to Fig. 1;

Fig. 3    illustrates an example schematic representation of the spectrum of a digital return-to-zero pulse;

Fig. 4    illustrates a first schematic representation of the spectrum mask for providing digital return-to-zero pulses according to Fig. 3;

Fig. 5    illustrates a second schematic representation of the spectrum mask for providing digital return-to-zero pulses according to Fig. 3;

Fig. 6    illustrates a reference eye diagram and a reference spectrum obtained by root-raised cosine filtering as well as a set of eye diagrams and spectra for digital RZ filtering using different pre-emphasis factors $\gamma$;

Fig. 7    illustrates a diagram showing the $Q^2$-factors in dependency of the channel power for a root-raised cosine filtering and digital RZ filtering using different pre-emphasis factors $\gamma$; and

Fig. 8    illustrates an example schematic block diagram of an optical transmitter adapted to transmit a polarization multiplexed QAM optical signal.

## DESCRIPTION OF ILLUSTRATIVE EMBODIMENTS

Optical non linearity is a major limitation on dispersion managed links in optical systems. One of the main limiting effects is the interaction between the symbols along one polarization with the symbol along the orthogonal polarization. A prior art solution used today is applying a RZ (return to zero) modulation before modulating the light with the data along the two polarizations. The pulses along each polarization are time interleaved in order to minimize nonlinear interactions. The main drawback of this solution is its associated cost and footprint. The second drawback is the spectrum width of the signal which can limit the possibility to densely pack the WDM channels.

Typically, an optically RZ generated spectrum is wider and does not have sharp spectrum edges. In this case, the spectrum width may be several time wider than the baudrate. For example, the spectrum may be almost 3 times wider for RZ50% (at 20dB attenuation from max power), and more than 3 times wider for RZ33%. RZ66% has a narrower spectrum width when only the main lobe is considered, but is even wider once the two powerful side lobes are also considered. In any case, when optical RZ is used, a narrow band optical filter is required to combine WDM channel densely.

The basic idea of this document is to use the capabilities of digital signal processing and a fast DAC (digital to analog convertor) on the transmitter side to generate the "RZ" signal. The first advantage of this approach is the absence of any new hardware equipment at the transmitter side (no cost or footprint issue). The second advantage is the capability to accurately shape the spectrum (and also the impulse response) to minimize the spectrum overlap between adjacent channels. Using a DAC operating at 2samples/symbol, any spectrum shape can be generated between frequencies -B and +B (B corresponding to the symbol rate), providing the DAC bandwidth is large enough.

Pulse shaping may be based on "Nyquist" pulse shaping using the RRC (root raised cosine) family. The target is to transmit the signal with the minimum bandwidth, i.e. on or just above the limit of the Baudrate width. The sharpness of the spectrum edge is typically limited by the depth/length of the transmitter digital filter: the longer the filter, the sharper the spectrum edge. In the present document, it is suggested to use digital signal processing and a DAC to generate a wider spectrum. Nevertheless, it is intended to produce sharp edges in order to minimize spectrum overlap with adjacent channels. Generation of high frequencies is required to produce "RZ" pulse shaping. But frequencies above the channel spacing divided by 2 (usually 50GHz/2 for WDM systems) should be avoided to minimize crosstalk with adjacent channels. In the following, a preferred spectrum mask for digital RZ is proposed. The main particularity of a digitally generated RZ spectrum is the wide (compared to baudrate) and flat spectrum, as well as sharp spectrum edges.

By generating digital RZ pulses, the signal energy can be maximized during half of the symbol duration (symbol center) and minimized during the other half symbol. When the 2 polarizations are time interleaved, this allows a minimization ofnon linear interactions. By introducing a smooth roll-off of 6 to 9dB in the spectrum, the intersymbol interference is significantly reduced and the power at T/2 is significantly reduced compared to the Nyquist case. Thus, the benefit of digital RZ pulse shaping is to provide high performance due to excellent non linear tolerance and minimum crosstalk from adjacent channels. On top, the transponder cost is also minimal as no additional optical modulator is required.

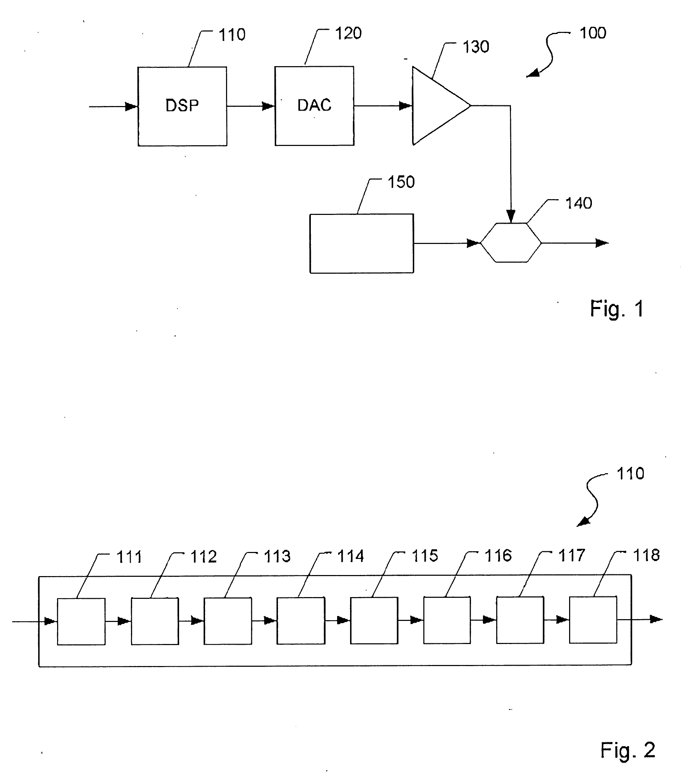

Fig. 1 shows a schematic block diagram of an embodiment of an optical transmitter 1. The optical transmitter 100 comprises a digital signal processing unit which may be formed by a digital signal processor DSP 110 operating based on software instructions or implemented in hardware. Said DSP 110 may be adapted to process a sequence of digital data values. The digital data values may be received by the DSP 110 or the DSP 110 may comprise an information source generating the sequence of digital data values. Said sequence of digital data values may be comprised in a digital data stream which contains information by means of a certain digital coding, Said coding may be for example a non-return-to-zero (NRZ) coding. Said DSP 110 is adapted to process the digital data values in order to apply a pulse shaping function to said digital data values which is described later on in closer detail.

In addition, the optical transmitter 100 comprises a digital-to-analog converter DAC 120. Said DAC 120 may be adapted to receive the pulse shaped sequence of digital data values provided by the DSP 110 in order to generate an analog sequence of signal values based on the pulse shaped sequence of digital data values. The analog sequence of signal values is provided to an amplifier 130. Said amplifier 130 may amplify the analog sequence of values in the electrical domain. The amplified analog sequence of signal values is provided to an optical modulator 140. Said optical modulator 140 may modulate an optical signal provided by an optical light source 150 based on the amplified analog sequence of signal values. For example, the optical light source 150 may comprise a laser diode. The optical signal may be modulated with a certain symbol rate B, in the following also referred to as Baud rate. Thereby, an optical signal comprising information according to the amplified analog sequence of signal values with a symbol rate B is generated which may be transmitted via an optical fiber.

Fig. 2 shows a schematic block diagram of the DSP 110 which may be used in the optical transmitter 100 according to Fig. 1. The DSP 110 may comprise an information source 111 generating the sequence of digital data values. According to other embodiments, the DSP 110 may receive the sequence of digital data values at an input interface. The information source 111 (alternatively the input interface) may be coupled with a bit-to-symbol mapper 112. The bit-to-symbol mapper 112 may receive digital data values in blocks and map them to complex symbols drawn from a given constellation in the complex plane. For example, in a QPSK scenario, there is a 4-point constellation in the complex plane. Each point is associated with two digital data values (bits). The bit-to-symbol mapper in this case reads digital data values by blocks of two, and for each input block, outputs the corresponding complex value. The optimum mapping between constellation points and bits is called Gray mapping. In polarization division multiplexing (PDM)-QPSK, a bit-to-symbol mapper per polarization may be used.

The output of the bit-to-symbol mapper 112 may be coupled with an input of an optional symbol-level nonlinearly equalization unit 113. The nonlinearly equalization unit 113 may apply a nonlinearity to the output of the bit-to-symbol mapper 112 in order to counter the nonlinear characteristic of subsequent RF amplifiers and/or IQ-modulator. For example, a polynomial function may be applied to the output of the bit-to-symbol mapper 112 in order to mitigate said nonlinearities.

Following the symbol-level nonlinearly equalization unit 113, an up-sampling unit 114 is provided which up-samples the digital signal provided by the symbol-level nonlinearly equalization unit 113. For example, the up-sampling factor may be in the range between 1.1 and 2.

The output of the up-sampling unit 114 is coupled with the input of a digital pulse shaping filter 115. Said digital pulse shaping filter 115 provides a pulse shaping filter function to the digital data values received at the input of the pulse shaping filter 115. The filter function of the digital pulse shaping filter 115 may be adapted to produce a shape of the signal pulses for the received digital data values such that the effect of optical nonlinearity of the optical transmission path (e.g. the optical fiber) is mitigated.

Following the digital pulse shaping filter 115, a further optional sample-level nonlinearly equalization unit 116 may be provided, i.e. the output of the digital pulse shaping filter 115 is coupled with the input of the sample-level nonlinearly equalization unit 116. The sample-level nonlinearly equalization unit 116 may apply a nonlinearity to the output of the digital pulse shaping filter 115 in order to counter the nonlinear characteristic of subsequent RF amplifiers and/or IQ-modulator. For example, a polynomial function may be applied to the output of the digital pulse shaping filter 115 in order to mitigate said nonlinearities. In typical scenarios, the sample-level nonlinearly equalization unit 116 may be used instead of the symbol-level nonlinearly equalization unit 113 because in the sample level, a more accurate mitigation of nonlinear effects may be obtained. However using a sample-level nonlinearly equalization unit 116 is more power consuming than using a symbol-level nonlinearly equalization unit 113. Also scenarios without using a symbol-level nonlinearly equalization unit 113 and a sample-level nonlinearly equalization unit 116 may be possible, specifically if the analog frontend (RF amplifiers and/or IQ-modulator) is quite linear.

The output of the symbol-level nonlinearly equalization unit 116 may be coupled with the input of an optional amplitude adjustment unit 117 or clipping unit. The amplitude adjustment unit 117 may limit the digital data values received at the input of the amplitude adjustment unit 117 if they exceed a threshold value. Thereby, a signal conditioning for an optimum quantization may be obtained.

Finally, the output of the amplitude adjustment unit 117 (if provided) may be coupled with the input of a quantization unit 118. Said quantization unit 118 may be adapted to map a large set of digital input values to a smaller set of digital output values in order to adapt the quantization of the digital values provided at the output of the DSP 110 to the desired quantization of the DAC.

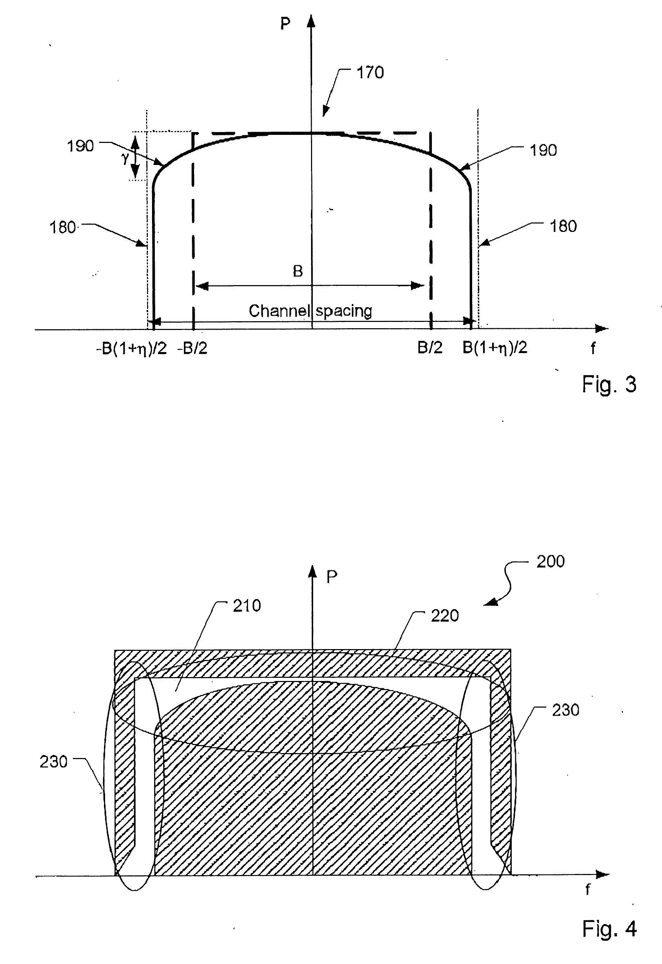

In the following, an example of a way to derive a filter function provided by the digital pulse shaping filter 115 is described in closer detail based on Fig. 3. The digital pulse shaping filter 115 is adapted to apply a filter function to the digital data values received at the input of the digital pulse shaping filter 115. The filter function increases the spectral bandwidth of the pulse shaped data values with respect to the Nyquist-bandwidth corresponding to the symbol rate B. In other words, the digital data values received at the input of the digital pulse shaping filter 115 are digitally filtered such that the spectral bandwidth of said filtered digital data values is broader than the spectral bandwidth of an ideal Nyquist filter being adapted to the symbol rate B of the modulated optical signal provided at the output of the optical transmitter 100. Preferably, a 3dB-bandwith of said filtered digital data values (solid line in Fig. 3) is broader than the spectral bandwidth of an ideal Nyquist filter (dashed line in Fig. 3) adapted to the symbol rate B. In addition, the spectral bandwidth, specifically a 3dB-bandwidth, of the digital pulse shaping filter 115 may be also broader than the spectral bandwidth, specifically a 3dB-bandwidth, of a root raised cosine filter which is a typical implementation of a Nyquist filter. By extending the spectral bandwidth of the filtered digital data values generated by the digital filter function of the digital pulse shaping filter 115, the signal power of the filtered digital data values (or digital data symbols) is concentrated in the center of the impulse response because of a narrowing of the digital data values in time domain, which reduces the inter-symbol interference ISI.

Preferably, the digital signal processor 110 is adapted to convert a non-return-to-zero (NRZ) signal (e.g. the sequence of digital data values to be processed by the DSP 110) to a return-to-zero (RZ) signal. Said conversion may be performed by a separate coding unit comprised e.g. within the DSP 110. The digital filtering for pulse forming may then be applied to the encoded RZ signal. Alternatively, the digital pulse shaping filter 115 may be adapted to perform the return-to-zero (RZ) pulse shaping, i.e. the digital pulse shaping filter 115 applies a filter function to the digital data values which performs the NRZ to RZ conversion and the pulse forming.

The optical transmitter 100 provides an optical signal according to a given wavelength division multiplexed (WDM) grid. The WDM grid may comprise a plurality of WDM channels which are arranged next to each other with a certain WDM channel spacing. In order to avoid inter-channel interference (ICI) of subsequent channels of the WDM system, the WDM channel spacing is larger than the symbol rate B of the modulated optical signal. According to embodiments, the channel spacing of the WDM grid exceeds the symbol rate B at least by a factor of 1.1. For example, the WDM channel spacing may be at least 25% larger, for example 30%, 35%, 40%, 45%, 50% or 55% larger than the symbol rate of the modulated optical signal.

In case of using an ideal Nyquist filter function at the digital pulse shaping filter 115 with a filter bandwidths equal to the symbol rate B of the modulated optical signal, the inter-symbol interference is theoretically minimal. When the filter bandwidth is increased in comparison to the symbol rate B, the inter-symbol interference of the Nyquist filter is rising. However, as indicated above, nonlinear effects can be mitigated by increasing the filter bandwidth. In order to keep the inter-symbol interference as small as possible, the digital pulse shaping filter 115 is adapted to generate signal pulses having a spectrum with a top 170, lateral edges 180 and respective corners 190 between the top 170 and each lateral edge 180 as represented by the solid spectrum line in Fig. 3. The shape of the top portion 180 of the spectrum is convex. The edges 180 are sharp and the corners 190 are rounded in the spectral domain of Fig 3. In other words, the filter function provided by the digital pulse shaping filter 115 is adapted to provide pulse shaped data values with rounded spectral corner regions 190 followed by sharp lateral edges 180 at the outer sides of the spectrum of the pulse shaped data values. Said lateral edges 180 may be located in close vicinity of the channel boundaries of the WDM grid.

Preferably, the digital pulse shaping filter 115 may be adapted to provide pulse shaped data values at the output of the digital pulse shaping filter 115 with a truncated Gaussian spectrum. Thereby, the nonlinear effects of optical fiber transmission can be mitigated while simultaneously limiting ISI. The truncated Gaussian spectrum of the pulse shaped digital data values may be defined by the following formula:

$$H(f; a; \eta; \gamma; B) = \begin{cases} \exp\left[\dfrac{-a\gamma f^2}{B^2(1+\eta)^2}\right]; & 0 < |f| < 0,5B(1+\eta) \\ 0; & otherwise \end{cases}$$

wherein a is a normalization constant, $\gamma$ is a pre-emphasis factor affecting the rounding of the spectral pulse corner regions, f is the frequency, B is the symbol rate and $\eta$ is a bandwidth extension factor affecting the amount of bandwidth extension with respect to the Nyquist bandwidth (cf. Fig. 3).

According to preferred embodiments, the normalization constant is chosen according to $0.4 < a < 0.6$, preferably $0.45 < a < 0.5$, specifically $a = 0.4604$. The pre-emphasis factor $\gamma$ may be chosen in the range of 3dB to 9dB, preferably from 6dB to 9dB, and the bandwidth extension factor may be chosen as $\eta \geq 0.25$. By using said values, respectively, value ranges, an optimized tradeoff between mitigation of nonlinear effects and minimization of ISI may be achieved.

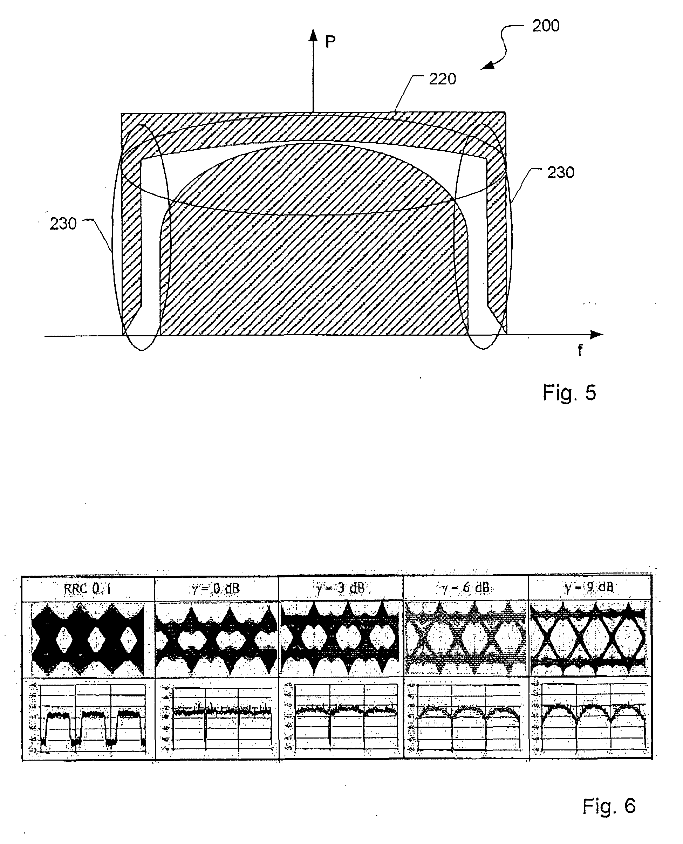

Fig. 4 and 5 show two different spectrum masks 200 according to which the spectra of the digital pulse shaped data values may be shaped. In other words, the digital pulse shaping filter 115 may be chosen such that the spectra of the pulse shaped digital data values, i.e. the spectra of the digital pulses at the output of the digital pulse shaping filter 115, are shaped according to said spectrum mask 200.

The spectral mask according to Fig. 4 is preferred for a channel spacing of WDM channels in the region of 1.1*B to 1.3*B, i.e. the channel spacing is greater than the symbol rate by a factor of 1.1 to 1.3. As a further example, the spectral mask according to Fig. 5 is configured for a channel spacing of the WDM channels in the region of 1.3*B to 1.7*B, i.e. the channel spacing is greater than the symbol rate by a factor of 1.3 to 1.7.

A spectral mask 200 defines a spectral corridor 210 according to which the spectrum of the digital pulse shaped data values is to be formed by the digital pulse shaping filter 115. The spectral corridor 210 comprises a top region 220 and two side regions 230. The spectral corridor 210 is axially symmetric with respect to axis P (i.e. the ordinate). The pre-emphasis factor $\gamma$ according to Fig. 4 is chosen such that the top region 220 widens by a value of 3dB at outer corner regions. In other words, in the top region 220 the corridor widens towards the outer corner regions, thereby allowing an attenuation at the outer corner regions. The attenuation between the maximum spectrum (in the center of the pulse spectrum) and the lower edge at the outer corner region 190 is 3dB (with respect to power). Thereby, a "rounding" of the spectrum of the digital pulse shaped data values is achieved and a convex top region 170 of the spectrum is provided.

The side regions 230 of the spectral mask are designed such that the outer edges coincide with the borders of a WDM channel and the width of the side regions 230 is 0.1 *B (i.e.10% of the symbol rate) until the spectral power of the pulse is decreased by a factor of 20dB at the borders of a WDM channel. In other words, the digital pulse shaping filter 115 is adapted to produce spectral edges 180 of the pulse shaped data values such that, at channel boundaries of the WDM grid, the power of the pulse shaped data values is at least 20dB lower than the maximum power value of the pulse shaped data values in the center of the pulse spectrum.

The spectral mask 200 according to Fig. 5 is similar to the spectral mask described above with respect to Fig. 4. The main difference is that the upper limitation as well as the lower limitation of the top region 220 is rounded. The upper limitation of the top region 220 is lowered to a 3dB attenuation whereas the lower limitation of the top region 220 is lowered to a 9dB attenuation, both values with respect to the maximum power value of the pulse shaped data values in the center of the pulse spectrum. Thereby a greater rounding of the spectrum of the digital pulse shaped data values is achieved, hence providing more attenuation in the transition region between the top portion 170 of the spectrum and the spectral edges 180. Such spectrum looks more like a (truncated) Gaussian spectrum which has an impulse response with more energy concentrated in a compact signal pulse thereby reducing ISI.

Fig. 6 shows a set of eye-diagrams of digital pulse shaped data values in the time domain and the respective spectra of said digital pulse shaped data values wherein each eye-diagram in the first row corresponds to the spectrum placed below it.

The far left eye-diagram-spectrum-combination in Fig. 6 shows a reference signal obtained at the output of the transmitter by filtering digital data values by means of a Nyquist pulse shaping implemented as a root raised cosine filter with a roll-off factor of 0.1. The other eye-diagram-spectrum-combinations refer to results achieved by filtering the digital data values by means of a digital pulse shaping filter which broadens the spectral bandwidth of the pulse shaped data values with respect to the Nyquist bandwidth corresponding to the symbol rate. The eye-diagram-spectrum-combinations refer to different configurations of the spectra of the pulse shaped data values, wherein the pre-emphasis factor is chosen according to $\gamma$=0dB, $\gamma$=3dB, $\gamma$=6dB and $\gamma$=9dB. The bandwidth extension factor is equal for all shown eye-diagram-spectrum-combinations, namely $\eta$ = 0.5, i.e. the spectral bandwidth of the pulse shaped data values is extended by 50% with respect to the Nyquist bandwidth. For example, if the symbol rate is 32GBaud, the Nyquist bandwidth is 32 GHz. For $\eta$ = 0.5, the spectral bandwidth of the pulse shaped data values is broadened to 48GHz.

By means of the digital filtering, the signal energy can be concentrated within the first half of the duration of the generated signal pulses, i.e. the first half of the symbol duration, whereas the energy is reduced in the second half of the duration of the digital data values. Thereby, by means of the digital pulse shaping filter 115, digital RZ signal pulses (or digital RZ symbols) may be obtained in the electrical domain. Referring back to the diagrams of Fig. 6, using pulse shaped data values with a pre-emphasis factor of $\gamma$=0dH, a flat spectrum may be obtained. Due to the bandwidth extension with respect to Nyquist bandwidth, a large performance penalty arises due to significant inter-symbol interference caused by the filter having a rectangular spectral shape. Said inter-symbol interference can be significantly reduced by increasing the pre-emphasis factor $\gamma$, because the spectrum of the filter function is changed from rectangular to (truncated) Gaussian having a more preferred impulse response than a rectangular pulse shaping filter.

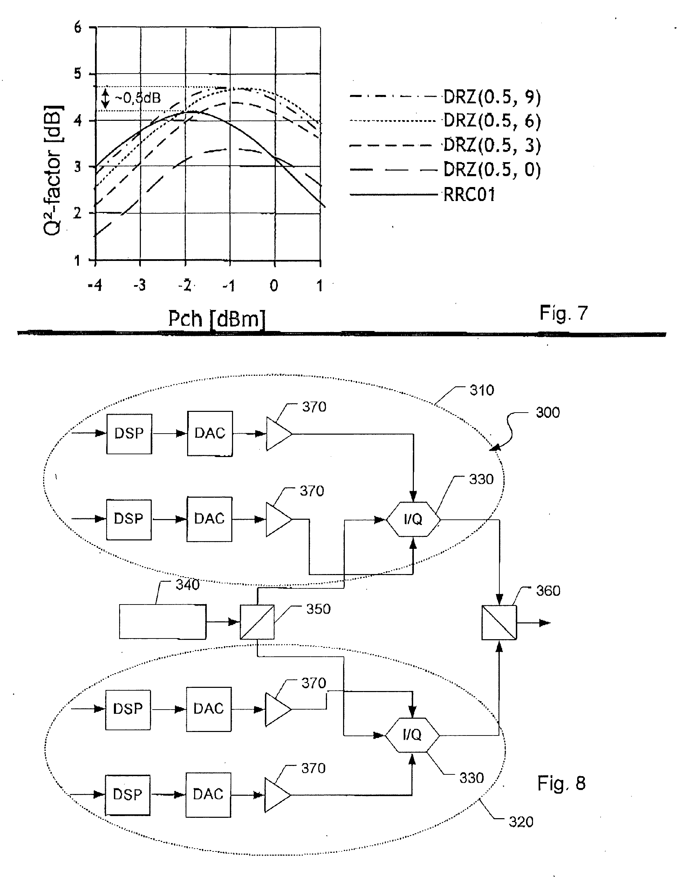

Fig. 7 shows the $Q^2$-factor over the channel power, i.e. the power of the optical signal provided to the optical transmission channel, e.g. the optical fiber. The optical transmitter 100 may be adapted to provide a polarization-multiplexed optical signal to said optical transmission channel. An optical transmitter 100 adapted to provide a polarization-multiplexed optical signal is described later on in association with Fig. 8.

In Fig. 7, the $Q^2$-factor over channel power for different spectral shapes of the transmitted data values, respectively, optical pulses is shown. The solid line shows the reference curve, namely the $Q^2$-factor when using a root raised cosine filter for pulse shaping of the data values. All dashed lines refer to different configurations of the spectra of pulse shaped data values obtained by a digital pulse shaping filtering which broadens the spectral shape with respect to the Nyquist bandwidth. Said different configurations are identical to the configurations shown in Fig. 6, i.e. the bandwidth extension factor is $\eta$ = 0.5 and the pre-emphasis factor ranges from $\gamma$=0dB to $\gamma$=9dB.

The configuration $\eta$ = 0.5 and $\gamma$=0dB shows the performance of digital RZ-pulses with a spectrum 50% wider than Nyquist bandwidth and a flat spectrum (0dB), i.e. no edge rounding. A penalty is observed at low channel power because of inter-symbol interference, as already mentioned before. Best performance is obtained for $\gamma$=6dB respectively $\gamma$=9dB. The optimum power is obtained at -1dBm (instead of -2dBm for the reference curve). Thus, the suggested digital pulse shaping allows operation with increased launch power, due to the reduced nonlinear effects. The $Q^2$-factor is improved by ~0.5dB and the optimum $Q^2$-factor is ~4.2dB.

Fig. 8 shows an optical transmitter 300 being configured to provide a polarization multiplexed optical signal at the optical transmitter output, i.e. a first optical signal comprising a first polarization is provided in combination with a second optical signal comprising a second polarization at the output, wherein the first and second polarization are perpendicular to each other.

The optical transmitter 300 comprises a first transmitter path 310 and a second transmitter path 320. Each transmitter path 310, 320 is configured to provide a signal which may be modulated in one of said polarization direction in order to obtain a polarized modulated optical signal. The polarized modulated optical signal may be a quadrature amplitude modulated signal, i.e. the modulator 330 which is used for modulating a polarized optical signal may be an I/Q-Modulator. In order to provide I-data values and Q-data values to the I/Q-Modulator, each transmitter path 310, 320 comprises two signal sub paths, wherein the first signal sub path provides the I-data values to the modulator 330 and the second signal sub path provides the Q-data values to the modulator 330. Similar to the optical transmitter 100 shown in Fig. 1, each signal path comprises a digital signal processor DSP, a digital-to-analog converter DAC and an amplifier 370. The DSP may be configured according to the embodiment of Fig. 2 described above.

The optical transmitter 300 further comprises an optical light source 340 which may be a laser. The optical signal provided by the optical light source 340 may be provided to a polarizing beam splitter which separates both polarizations. A first polarization of the optical signal may be provided to the first modulator 330 and a second polarization of the optical signal may be provided to a second modulator 330. Thereby different information can be modulated onto the respective polarized optical signal. After modulating the respective optical signals, both polarized modulated optical signals may be combined using a polarization beam combiner 360 in order to obtain an optical signal comprising both polarized modulated optical signals. Said optical signal comprising both polarized modulated optical signals can be transmitted via a single optical fiber. Preferably, the DSPs of the optical transmitter 300 are adapted to provide digital RZ data values as described above, wherein the digital RZ data values of the first and second transmitter path 310, 320 are time-interleaved by a half symbol length (T/2). Thereby, the overlapping between the RZ data values of the first and second transmitter path 310, 320 is significantly reduced leading to a reduced inter-symbol interference.

Summing up, an optical transmitter and a method for providing an optical signal according to a Wavelength Division Multiplex (WDM) grid with a WDM channel spacing to a dispersion managed optical link have been proposed. Said optical transmitter is advantageous because the nonlinear distortions are significantly reduced while keeping the inter-symbol interference and inter-channel interference as low as possible. In addition, the optical transmitter generates RZ digital data values already in the electrical digital domain whereas prior art optical transmitters use an optical modulator in the optical domain in order to apply RZ coding to the optical modulated signal. Thereby, the cost and footprint of the optical transmitter can be reduced because no additional optical modulator is required.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the explicit use of the term "processor" or "computer" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random-access memory (RAM), and non-volatile storage. Other hardware, conventional and/or custom, may also be included.

**Claims**

1. Optical transmitter (100, 300) for providing an optical signal according to a Wavelength Division Multiplex (WDM) grid with a WDM channel spacing to a dispersion managed optical link, the optical transmitter (100, 300) comprising:

   - a digital signal processor (DSP) (110) for processing a sequence of digital data values, the digital signal processor (110) being adapted to generate a Return-to-zero (RZ) pulse shaping for the sequence of digital data values by applying a digital pulse shaping filter (115) to thereby generate a pulse shaped sequence of data values;
   - a digital to analog converter (DAC) (120) being adapted to generate an analog sequence of signal values based on the pulse shaped sequence of data values;
   - an optical light source (150) for providing an optical signal; and
   - an optical modulator (140) being adapted to modulate, at a symbol rate (B), the optical signal based on said analog sequence of signal values,

   wherein the channel spacing of the WDM grid is greater than said symbol rate (B), and the digital pulse shaping filter (115) is adapted to increase the spectral bandwidth of the pulse shaped data values with respect to the Nyquist bandwidth corresponding to the symbol rate (B).

2. Optical transmitter according to claim 1, wherein the pulse shaped data values define a spectrum with top (170), lateral edges (180) and respective corners (190) between the top (170) and the lateral edges (180), and the digital pulse shaping filter (115) is adapted to round said corners (190) in the spectrum of the pulse shaped data values.

3. Optical transmitter according to claim 1 or 2, wherein the digital pulse shaping filter (115) is adapted to increase the spectral bandwidth of data pulses by at least 25%, preferably by 50% with reference to the symbol rate (B).

4. Optical transmitter according to claim 3, wherein the digital pulse shaping filter (115) is adapted to increase the spectral 3dB bandwidth of data pulses.

5. Optical transmitter according to anyone of the preceding claims, wherein the channel spacing of the WDM grid exceeds the symbol rate (B) at least by a factor of 1.1, preferably by a factor between 1.3 and 1.7.

6. Optical transmitter according to anyone of the preceding claims, wherein the digital pulse shaping filter (115) is adapted to produce attenuated spectral edges (180) of the pulse shaped data values such that, at channel boundaries of the WDM grid, the spectral power of the pulse shaped data values is at least 20dB lower than the maximum spectral power value of the pulse shaped data values.

7. Optical transmitter according to claim 2, wherein the spectrum has a convex top portion (170) and sharp edges (180).

8. Optical transmitter according to anyone of the preceding claims, wherein the digital pulse shaping filter (115) is adapted to provide pulse shaped data values with a truncated Gaussian spectrum.

9. Optical transmitter according to anyone of the preceding claims, wherein the digital pulse shaping filter (115) is adapted to provide pulse shaped data values with a spectral shape according to the following formula:

$$H(f; a; \eta; \gamma) = \begin{cases} \exp\left[\dfrac{-a\gamma f^2}{B^2(1+\eta)^2}\right]; & 0 < |f| < 0,5B(1+\eta) \\ 0; & otherwise \end{cases}$$

wherein $\alpha$, $\gamma$, and $\eta$ are parameter values for defining the spectral shape.

10. Optical transmitter according to claim 9, wherein $\eta$ defines the bandwidth extension of the spectrum of the pulse shaped data values with respect to the Nyquist bandwidth and wherein $\eta \geq 0.25$.

11. Optical transmitter according to claim 9 or 10, wherein $\gamma$ defines the rounding of the spectrum of the pulse shaped data values and wherein 0dB< $\gamma$ < 10dB.

12. Optical transmitter according to anyone of the preceding claims, wherein the pulse shaping filter (115) is a digital finite impulse response filter.

13. Optical transmitter according to anyone of the preceding claims, comprising a first transmitter path (310) adapted to provide a first optical signal with a first polarization direction and a second transmitter path (320) adapted to provide a second optical signal with a second polarization direction.

14. Optical transmitter according to claim 13, wherein the first transmitter path (310) comprises an optical modulator (330) for modulating the first optical signal and the second transmitter path (320) comprises an optical modulator (330) for modulating the second optical signal, wherein the optical modulator of the first transmitter path is configured to modulate the first optical signal and the optical modulator of the second transmitter path is configured to modulate the second optical signal such that the optical pulses of the first and second optical signal are time-interleaved.

15. Method for providing an optical signal to a dispersion managed optical link having a Wavelength Division Multiplex (WDM) grid with a WDM channel spacing, the method comprising the steps of:

   - digitally processing a sequence of digital data values, the digital processing including a Return-to-zero (RZ) pulse shaping for the sequence of digital data values by applying a pulse shaping filter (115) to thereby generate a pulse shaped sequence of data values;
   - generating an analog sequence of signal values based on the pulse shaped sequence of data values; and
   - modulating, at a symbol rate (B), an optical signal based on said analog sequence of signal values,

wherein the channel spacing of the WDM grid is greater than said symbol rate (B), and the digital pulse shaping filter (115) increases the spectral bandwidth of the pulse shaped data values with respect to the Nyquist bandwidth corresponding to the symbol rate (B).

Fig. 1

Fig. 2

EP 2 975 789 A1

Fig. 3

Fig. 4

12

Fig. 5

Fig. 6

Fig. 7

Fig. 8

Europäisches
Patentamt

European
Patent Office

Office européen
des brevets

## EUROPEAN SEARCH REPORT

**Application Number**

EP 14 29 0219

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SINKIN OLEG V ET AL: "Nonlinearity mitigation with spectral shaping for channel spacing greater than Nyquist", OFC 2014, OSA, 9 March 2014 (2014-03-09), pages 1-3, XP032633057, DOI: 10.1109/OFC.2014.6886972 [retrieved on 2014-08-27] | 1-9, 12-15 | INV. H04B10/516 H04J14/02 |
| A | * 1. Introduction 2. Theoretical consideration 3. Experiment and Discussion; figures 1,2,3 * | 10,11 | |
| Y | US 2008/019703 A1 (BURCHFIEL JERRY D [US]) 24 January 2008 (2008-01-24) | 1-6, 13-15 | |
| A | * paragraphs [0001] - [0013]; figure 1 * | 7-12 | |
| A | EP 2 645 599 A1 (ALCATEL LUCENT [FR]) 2 October 2013 (2013-10-02) * paragraphs [0002] - [0004], [0028] - [0029]; figure 1e * * paragraphs [0002] - [0007], [0029] - [0030]; figure 2a * | 1-15 | |
| Y | EP 2 648 360 A1 (ALCATEL LUCENT [FR]) 9 October 2013 (2013-10-09) | 7-9,12 | TECHNICAL FIELDS SEARCHED (IPC) H04B H04J |
| A | | 1-6,10, 11,13,15 | |

The present search report has been drawn up for all claims

| Place of search | Date of completion of the search | Examiner |
|---|---|---|
| Munich | 15 January 2015 | De Vries, Jane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                     EP 14 29 0219

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2015

| Patent document cited in search report | | Publication date | Patent family member(s) | | Publication date |
|---|---|---|---|---|---|
| US 2008019703 | A1 | 24-01-2008 | NONE | | |
| EP 2645599 | A1 | 02-10-2013 | CN | 104170283 A | 26-11-2014 |
| | | | EP | 2645599 A1 | 02-10-2013 |
| | | | WO | 2013143976 A1 | 03-10-2013 |
| EP 2648360 | A1 | 09-10-2013 | CN | 104205719 A | 10-12-2014 |
| | | | EP | 2648360 A1 | 09-10-2013 |
| | | | WO | 2013149847 A1 | 10-10-2013 |

EPO FORM P0459

For more details about this annex : see Official Journal of the European Patent Office, No. 12/82